# EUROPEAN PATENT APPLICATION

(11) **EP 4 230 356 A1**
(43) Date of publication of application: **23.08.2023**
(21) Application number: 23153325.8
(22) Date of filing: 25.01.2023
(51) Int. Cl.: B25H 7/00, G01B 3/56

(54) **A TEMPLATING TOOL AND METHOD**

(30) Priority: 22.02.2022 GB 202202392
(71) Applicant: The West Retail Group Limited, Barton-upon-Humber North Lincolnshire DN18 5RL (GB)
(72) Inventor: SMALLEY, Nathan, Barton-upon-Humber, DN18 5RL (GB); WAIN, Oliver, Barton-upon-Humber, DN18 5RL (GB)
(74) Representative: Haseltine Lake Kempner LLP

(57) **Abstract**

A templating tool 1, 100 for templating the dimensions of a kitchen worktop, the templating tool comprising: a measurement target 10, 110; and an engagement formation 20, 120 for engaging a kitchen unit 50 on which the worktop will be installed, wherein the measurement target is spaced apart from the engagement formation by a predetermined distance such that upon engagement of the kitchen unit by the engagement formation, the measurement target defines a predetermined distance from the unit. A method 400 of templating is also provided.

## Description

### Technical Field

The present disclosure relates to a templating tool and a method of templating, and is particularly, although not exclusively, concerned with a templating tool for templating the overhang of a kitchen worktop.

### Background

Kitchen worktops may be manufactured to order and installed so as to overhang the cabinets or units beneath by a predetermined distance. For example, a worktop may be manufactured and installed such that it extends 60 mm beyond the front surface of the cabinet below. Accordingly, the manufactured dimensions of the worktop are dependent upon the locations and dimensions of the cabinets.

The determination of the required dimensions of a component (e.g. a worktop) according to the dimensions and geometry of pre-existing features (e.g. those of pre-installed kitchen components or those of a room itself) is often referred to as "templating".

It is desirable during kitchen design and manufacture, as well as other design and construction work, that the templated dimensions of a component are known to a high degree of accuracy and precision. Accordingly, it is desirable that errors in measuring and calculating dimensions are reduced and if possible prevented.

### Statements of Invention

According to existing methods, when determining the dimensions of a worktop to be installed on a bank of cabinets, a user may typically determine the location and dimensions of the cabinets (e.g. by laser), and subsequently determine the dimensions of the worktop based on the desired overhang and relationship between the worktop and the cabinets.

However, the present inventors have determined that, when determining the location and dimensions of the cabinets, merely directing a laser onto the surface of a cabinet may result in measurement errors, e.g. due to the surface finish of the cabinet causing diffuse reflections, or due to the large surface area of a cabinet allowing for multiple measurement locations.

Further, as all sides of a cabinet are not visible from the same location, it is required to take a second laser measurement from a different position. It is therefore desirable to simplify the process of templating and reduce the scope for error.

According to an aspect of the present disclosure, there is provided a templating tool for templating the dimensions of a worktop or other substantially planar component, the templating tool comprising: a measurement target; and an engagement formation for engaging a support on which the worktop or component will be installed. The measurement target may be spaced apart from the engagement formation by a predetermined distance. Upon engagement of the support by the engagement formation, the measurement target may define a predetermined distance from the support. This aspect may form part of and/or be used in combination with any of the following aspects.

According to another aspect of the present disclosure, there is provided a templating tool for templating the dimensions of a kitchen worktop, the templating tool comprising: a measurement target; an engagement formation for engaging a kitchen unit (e.g. a kitchen cabinet or cupboard, preferably a floor-standing unit) on which the worktop will be installed; and a body portion, wherein the measurement target and the engagement formation extend away from the body portion, wherein the measurement target is spaced apart from the engagement formation by a predetermined distance such that upon engagement of the kitchen unit by the engagement formation, the measurement target defines a predetermined distance from the unit (e.g. a front or exterior surface thereof).

The tool may allow a user to directly determine the location of an edge of the desired worktop, without having to perform successive calculations based on indirect measurements, each calculation and measurement of which entails its own error margins.

The predetermined distance may correspond with (e.g. be substantially equal to) the desired overhang of the worktop once installed.

The engagement formation may comprise a substantially planar protrusion. The engagement formation (e.g., the substantially planar protrusion) may comprise an engagement surface for engaging and/or abutting (e.g. configured to engage and/or abut, optionally in a vertical plane) an external surface of the unit (e.g. an external vertical surface of a unit). The external surface of the unit may comprise an external front, back, side or lateral surface of the unit, such as a front or back panel of a cabinet, or a support strut of the unit (e.g. on which the installed worktop will rest). The engagement formation may additionally comprise an underside of the body portion (e.g., an underside of the balancing portion) for engaging an upper surface of a cabinet or other component.

The measurement target may define a plane (e.g. a vertical plane) at a predetermined distance from the engagement formation (e.g. the engagement surface). The plane may extend perpendicularly away from the body portion, and may have first and second major surfaces. The first major surface may comprise a distal face, and the second major surface may comprise a proximal face. The engagement surface and the measurement target (e.g., the measurement surface) may be parallel.

The templating tool may comprise a body portion. The body portion may be substantially planar. The measurement target and the engagement formation may extend away from the body portion, optionally in opposite directions (e.g. directions perpendicular to a plane of the body portion).

The body portion may comprise a spacing portion which defines the predetermined distance between the measurement target and the engagement formation (e.g. the predetermined distance between the measurement surface and the engagement surface). The pre-determined distance may be non-zero. The measurement target and the engagement formation may not be contiguous (e.g., may not form or share a common boundary or surface).

The measurement target may be provided at a distal end of the body portion. The measurement target may comprise a measurement surface. The measurement surface may comprise: a distal face (e.g. an external end face) of the measurement target at a predetermined distance from the engagement formation (e.g. the engagement surface); or a proximal face (e.g. an internal end face) of the measurement target at a predetermined distance from the engagement formation (e.g. the engagement surface). The measurement target and/or the measurement surface may be substantially planar and extend perpendicularly away from the plane of the body portion.

The engagement formation may be provided part way (e.g. half way) along the tool, at an opposite end of the spacing portion to the measurement target. The engagement formation may be provided at the junction between the spacing portion and a balancing portion. The engagement formation and/or the engagement surface may be substantially planar.

The tool may be configured to rest (e.g. balance) on a top or upper edge or surface of an external panel or component (e.g. the component on which the worktop will be supported) of the unit (e.g. without toppling or sliding or rotating about the edge of the external panel). The top or upper edge may be providable (e.g., provided) in a horizontal plane and/or may face upwards.

The body portion may comprise a balancing portion configured to balance the tool on a top (e.g. upward facing) edge of a panel or component of the unit. The balancing portion may act as a counterweight to the measurement target, the engagement formation and the spacing portion.

Upon engagement of the unit by the engagement formation, the tool (e.g. the body portion) may extend beyond and behind the edge of the external component. The spacing portion and/or the measurement target may extend away from (e.g. beyond or proud of or in front of or outwardly of) the unit (e.g. the top edge and/or the surface engaged by the engagement surface). The balancing portion may extend inwardly of the unit (e.g. towards the interior of the unit). Only the balancing portion (e.g. the underside of the balancing portion) may support the weight of the tool on the unit (e.g. the edge of the external component of the unit).

The balancing portion may comprise a thickness dimension which is greater than (e.g. twice) that of the spacing portion. The balancing portion may have a thickness substantially equal to that of the spacing portion, such that the body portion may have a uniform thickness. The balancing portion may be weighted.

The body portion may comprise a change in a thickness dimension. The change in thickness may be provided at the junction or interface between the spacing portion and the balancing portion. The change in thickness may be provided in alignment with (e.g. adjacent) the engagement formation.

The predetermined distance may be zero (e.g. the measurement surface and the engagement surface may be coplanar), 10 mm, 35 mm, or 60 mm. The engagement surface and the balancing portion may engage different surfaces of the same component, or may engage different surfaces of different components.

According to another aspect of the present disclosure, there is provided a kit comprising a pair of templating tools. The pair may comprise a first tool and a second tool. For the first tool, the predetermined distance may be defined from the engagement formation to the measurement surface of the tool, the measurement surface comprising a distal and/or exterior face of the measurement target. For the second tool, the predetermined distance may be defined from the engagement formation to the measurement surface of the second tool, the measurement surface of the second tool comprising a proximal and/or interior face of the measurement target.

According to another aspect of the present disclosure, there is provided a method of templating a component (e.g. a worktop), the method comprising: engaging a support on which the component will be installed; and taking a measurement to and/or from the measurement surface of the tool. The method may comprise placing the tool on an upper (e.g. upward facing) surface of a support (e.g. a kitchen unit).

The method may comprise a method of templating a worktop, the method comprising engaging, by the engagement formation, a unit on which the worktop will be installed, and taking a measurement to the measurement surface of the tool.

The method may comprise engaging an external surface (e.g. external vertical surface) of the unit by the engagement surface of the tool. The method may comprise balancing the tool on an upper surface of the unit.

The method may comprise engaging the unit by a second tool (e.g. a second tool of a pair of tools). The second tool may engage the unit on an aspect of the unit opposite to that on which the first tool is placed. The method may comprise taking a measurement from the measurement surfaces of both tools. The method may comprise taking a measurement from the measurement surfaces of both tools from the same laser device location.

To avoid unnecessary duplication of effort and repetition of text in the specification, certain features are described in relation to only one or several aspects or embodiments of the invention. However, it is to be understood that, where it is technically possible, features described in relation to any aspect or embodiment of the invention may also be used with any other aspect or embodiment of the invention.

### Brief Description of Drawings

For a better understanding of the present invention, and to show more clearly how it may be carried into effect, reference will now be made, by way of example, to the accompanying drawings, in which:
Fig. 1 is a perspective view of a templating tool according to a first embodiment;
Fig. 2 is a side view of the templating tool of Fig. 1 during use;
Fig. 3 is a side view of a templating tool according to a second embodiment during use; and
Fig. 4 is a method according to the present disclosure.

Throughout the drawings, like reference numerals are used to refer to like features.

### Detailed Description

### Near side embodiment

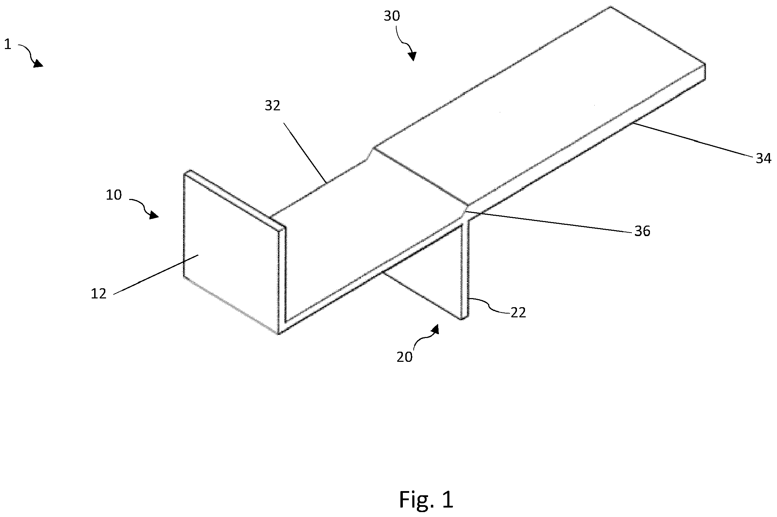

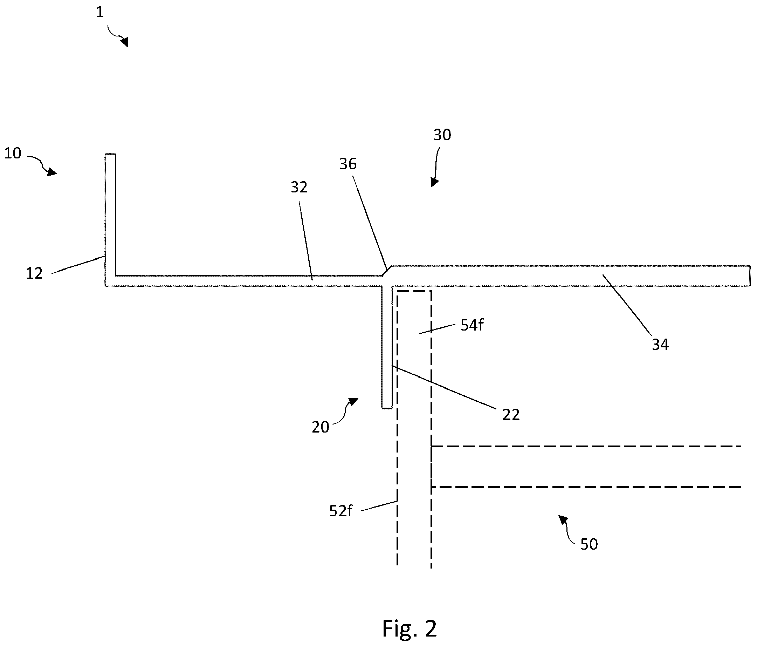

With reference to Figs. 1 and 2, a templating tool 1 according to a first embodiment comprises a substantially planar body portion 30 having a substantially rectangular in-plane geometry. At a first end of the body portion 30, a measurement target 10 extends perpendicularly away from the body portion 30 in a first direction.

Part way along the body portion 30, an engagement formation 20 extends perpendicularly away from the body portion in a second direction. In particular, the engagement formation 20 extends away from a lower surface or underside of the body portion 30, while the measurement target 10 extends away from an upper surface of the body portion 30. In the illustrated arrangement, the measurement target 10 and the engagement formation 20 extend away from the body portion 30 in opposing but parallel directions, such that the first and second directions oppose one another.

The body portion 30 comprises a spacing portion 32 which defines a perpendicular separation between the measurement target 10 and the engagement formation 20. The body portion 30 further comprises a balancing portion 34 which, as will be explained later, is configured to act as a counterweight to the spacing portion 32, the measurement target 10 and the engagement formation 20.

The spacing portion 32 and the balancing portion 34 are coplanar and arranged in series along the length of the body portion 30. The balancing portion 34 comprises a thickness which is approximately twice that of the spacing portion 32, such that at the junction between the spacing portion 32 and the balancing portion 34, the body portion 30 comprises a change in thickness 36. In the illustrated embodiment, the change in thickness 36 is provided adjacent (e.g. substantially aligned with) the engagement formation 20, and is defined by the interface between the spacing portion 32 and the balancing portion 34.

The engagement formation 20 comprises a substantially planar protrusion, the plane of which is perpendicular to the plane of the body portion 30. The engagement formation 20 comprises an engagement surface 22 (on the obscured major surface of the engagement formation 20 shown in Fig. 1), which is configured to engage a surface 52f (Fig. 2) of a kitchen cabinet 50 or other item of furniture, on which the worktop will eventually be installed. In particular, and as will be described later, the engagement surface 22 is configured to abut an external front surface 52f (e.g. cabinet door, frontal, panel or support strut) of a kitchen cabinet 50.

The measurement target 10 is substantially planar, the plane of which is perpendicular to the plane of the body portion 30 and parallel with the plane of the engagement surface 22. The measurement target 10 comprises a measurement surface 12, which forms an end face of the templating tool 1. The measurement surface 12 is configured to be used as a measurement target, such as a laser measurement target from which laser distance measurements may be taken.

The measurement target 10 and the engagement formation 20 are spaced apart by a predetermined perpendicular distance which corresponds to the templating overhang which the tool 1 is configured to template. For example, when the templating tool 1 is configured to template an overhang of 60 mm between a front edge of a worktop and the front surface 52f of a cupboard beneath, the perpendicular distance between the measurement surface 12 and the engagement surface 22 is equal to 60 mm.

Fig. 2 shows the templating tool 1 during use. The templating tool 1 is placed on a top surface of a kitchen cabinet 50 (shown in dashed lines), specifically an external component or panel 54f thereof, such as a front panel, a door frontal or a support strut. In a preferred example, the templating tool 1 is placed on top of the surface on which the templated worktop will eventually sit. The underside of the balancing portion 34 thereby rests upon the upper surface of the front panel 54f. The engagement surface 22 of the engagement formation 20 may abut the external front surface 52f of the same external front panel 54f, or alternatively may abut an external front surface of a different component, such as a front surface of a cabinet door (the upper surface of the cabinet door would not bear the weight of the installed worktop). It will be noted that the small separation between the surfaces 22 and 52f in Fig. 2 is for ease of understanding, and that upon abutment, this gap will not exist in practice.

Accordingly, upon engagement (e.g. abutment) of a front surface 52f of a cupboard by the engagement surface 22, the measurement surface 12 defines a plane which is a predetermined perpendicular distance from the engagement surface 22 and thus from the front surface 52f of the kitchen cabinet 50.

A distance measurement (e.g. a laser distance measurement) may thereby be taken against the measurement surface 12, e.g. so as to determine a distance from a site datum to the front edge of the desired worktop. That is, with reference to the orientation shown in Fig. 2, a laser measurement may be taken from the left hand side to the measurement surface 12 of the templating tool. Accordingly, the templating tool 1 may be used to template a worktop overhang for the nearside or front side of a cabinet or bank of cabinets, e.g. relative to a site datum from which laser measurements are taken.

The balancing portion 34 is configured (e.g. provided with a thickness dimension, a length dimension and/or weighted) to act as a counterweight to the spacing portion 32, the measurement target 10 and the engagement formation 20, such that the templating tool 1 is able to balance on the relatively narrow top surface of the external panel 54f of the kitchen cabinet 50. In particular, the balancing portion 34 may be configured to maintain the engagement surface 22 and the underside of the balancing portion 34 in abutment with external panel 54f, and thereby prevent the tool 1 from rotating or sliding relative to the external panel 54f when a user leaves the tool 1 in position.

### Far side embodiment

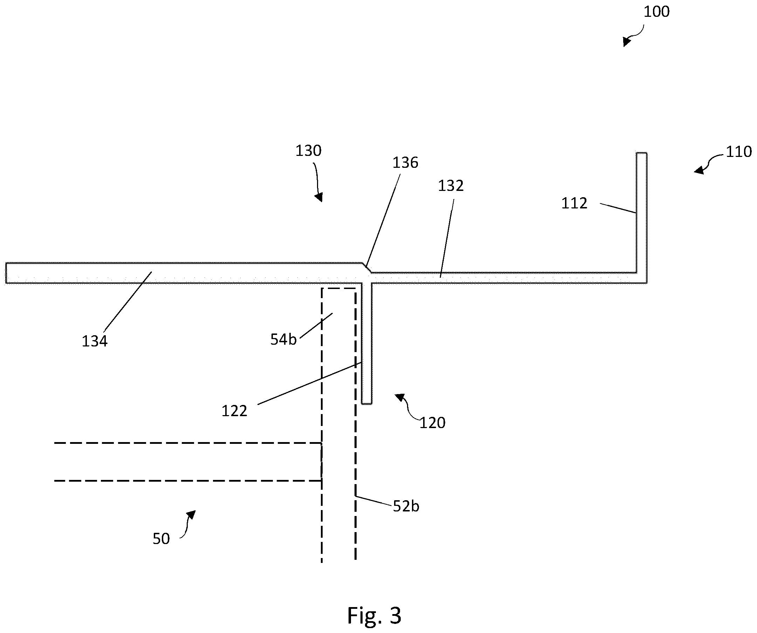

With reference to Fig. 3, a templating tool 100 according to a second embodiment is described. The templating tool 100 is identical to the templating tool 1 of the first embodiment, with the exceptions set out below. The templating tool 100 may be used to template a worktop overhang on the far side or rear side of a cabinet or bank of cabinets, e.g. relative to a site datum form which laser measurements are taken. In relation to Figs. 1 and 2, like reference numerals are used to refer to like features in Fig. 3.

The templating tool 100 comprises a measurement target 110 provided at a predetermined distance from the engagement formation 120. As with the templating tool 1, the measurement target 110 is provided at a predetermined distance from the engagement surface 122, which is configured to abut an external back surface 52b of an external back panel 54b or other component of a cupboard 50. As is shown by the reflected orientation of the cabinet 50 in Fig. 3 relative to the cabinet 50 of Fig. 2, the external back panel 54b may be provided on an opposite aspect to that of the external front panel 54f of the same cupboard 50 of Fig. 2.

The measurement surface 112 defines a predetermined distance from the engagement surface 122, such that when the engagement formation 120 engages the external panel 54b in the same manner as external panel 54f, the measurement surface 112 defines a predetermined distance to the external surface 52b of the external panel 54b.

However, the templating tool 100 differs from the templating tool 1 in that the measurement target 110 comprises a measurement surface 112 on an interior or proximal face, rather than the exterior or distal end face of the target 10 as per Fig. 2. Accordingly, when templating a far side worktop overhang of 60 mm, the distance between the engagement surface 122 and the interior measurement surface 112 is 60 mm, whereas when templating a nearside worktop overhang of 60 mm, the distance between the engagement surface 22 and the measurement surface 12 provided on a distal end face of the tool 1 is 60 mm. In other words, the perpendicular distance between the measurement surfaces 112, 122 and the engagement surfaces 12, 22 may differ by the thickness dimension of the measurement target 10, 110 when a pair of tools 1, 100 is used to template the same overhang.

In order to template the far edge of a worktop overhang, a distance measurement (e.g. a laser measurement) may thereby be taken from the site datum to the measurement surface 112 in order to determine the distance from the site datum to the far edge of the desired worktop overhang. In relation to the orientation shown in Fig. 3, the site datum may be to the left of the figure, and a laser measurement may be taken from the left hand side of the drawing to the leftward-facing measurement surface 112.

Accordingly, when templating two edges of a worktop for a kitchen cabinet 50 (e.g. a bank or an array of kitchen cabinets), a user may place the tool 1 on the near side of the cabinet 50 (e.g. on external front panel 52f) and the tool 100 on the far side of the cabinet 50 (e.g. on external back panel 52b). The measurement surface 12 and the measurement surface 112 will then both be facing the same direction, such that distance measurements to each desired overhang (e.g. from the left hand side towards the right hand side in each of Figs. 2 and 3) may be taken from the same site datum, e.g. without requiring repositioning of the measurement origin.

Put differently, a pair of templating tools 1, 100 may comprise a first tool 1 which defines a predetermined distance from an engagement surface 22 to the measurement surface 12, and a second tool 100 which defines the same predetermined distance from an engagement surface 122 to the measurement surface 112, the difference between the tools 1, 100 being that the same distance is defined by different faces of the measurement target 10, 110.

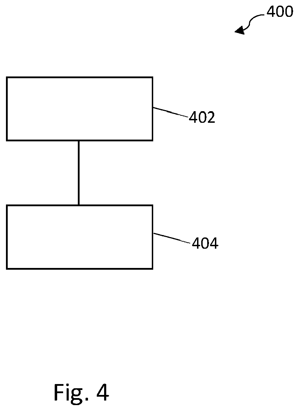

With reference to Fig. 4, a method 400 of the present invention is described. The method 400 comprises 402 placing a templating tool 1, 100 on an upper surface of an external panel or component 54f, 54b of a kitchen cabinet, and 404, taking a distance measurement to the measurement surface 12, 112 of the tool 1, 100.

The method 400 may additionally comprise placing a second templating tool 1, 100 (e.g. the other of tools 1, 100) on top of a surface 54f, 54b (e.g. a surface opposing the surface 54f, 54b) of a kitchen cabinet, and taking a distance measurement to the measurement surface 12, 112 of the second templating tool 1, 100. The method may further comprise templating the worktop (e.g. determining a dimension thereof) by determining a difference between the two distances to the measurement surfaces 12, 112.

### 10 mm example

In an example near side embodiment: the tool 1 comprises a total length of 85 mm; the body portion 30 comprises a width of 30 mm; the spacing portion 32 comprises a thickness of 2 mm and a length of 6 mm; the balancing portion 34 comprises a length of 75 mm and a thickness of 4 mm; the measurement target 10 comprises a thickness of 2 mm and a height of 25 mm; the engagement formation 20 comprises a thickness of 2 mm and a height of 25 mm; and the change in thickness 36 comprises a 45 degree incline in alignment with and spanning the 2 mm engagement formation 20. The measurement surface 12 is therefore provided 10 mm from the engagement surface 22.

In an example corresponding far side embodiment: the tool 100 comprises a total length of 87 mm; the body portion 130 comprises a width of 30 mm; the spacing portion 132 comprises a thickness of 2 mm and a length of 8 mm; the balancing portion 134 comprises a length of 75 mm and a thickness of 4 mm; the measurement target 110 comprises a thickness of 2 mm and a height of 25 mm; the engagement formation 120 comprises a thickness of 2 mm and a height of 25 mm; and the change in thickness 136 comprises a 45 degree incline in alignment with and spanning the 2 mm engagement formation 120. The measurement surface 112 is therefore provided 10 mm from the engagement surface 122.

### 35 mm example

The 35 mm example near side embodiment may have the same dimensions as the 10 mm example near side embodiment, with the exceptions that: the tool 1 comprises a total length of 110 mm; the spacing portion 32 comprises a length of 31 mm. Accordingly, the measurement surface 12 is provided 35 mm from the engagement surface 22.

The 35 mm example far side embodiment may have the same dimensions as to the 10 mm example far side embodiment, with the exceptions that: the tool 100 comprises a total length of 112 mm; the spacing portion 132 comprises a length of 33 mm. Accordingly, the measurement surface 112 is provided 35 mm from the engagement surface 122.

### 60 mm example

The 60 mm example near side embodiment may have the same dimensions as the 10 mm example near side embodiment, with the exceptions that: the tool 1 comprises a total length of 135 mm; the spacing portion 32 comprises a length of 56 mm. Accordingly, the measurement surface 12 is provided 60 mm from the engagement surface 22.

The 35 mm example far side embodiment may have the same dimensions as to the 10 mm example far side embodiment, with the exceptions that: the tool 100 comprises a total length of 137 mm; the spacing portion 132 comprises a length of 58 mm. Accordingly, the measurement surface 112 is provided 60 mm from the engagement surface 122.

### Advantages

The present inventors have determined that the tools 1, 100 and method 400 of the present invention may obviate the requirement to laser measure against the front surface of the kitchen cabinet itself, which can return erroneous results due to the surface finish of the cabinet and/or the large surface area of the cupboard allowing a vast number of potential measurement locations.

Further, the present invention may reduce the errors associated with worktop templating, by reducing the number of measurements to be taken and/or by reducing the number of subsequent calculations to be performed.

The present invention may permit a user to template a worktop from only a single location. For example, ordinarily the surface constituting the far side of a cabinet is not visible from the near side of the cabinet, such that a user might need to take a first measurement to the near side, and then relocate to the far side so as to take a second measurement to the far side, and then perform a subsequent calculation. The tool 100 of the present invention permits the far edge of a worktop to be templated from the near side.

Although the present invention has been described largely in relation to kitchen cabinets, it will be appreciated by the skilled person that the present disclosure may equally be applied to worktops for other uses and similarly to templating for other purposes, such as worktops for workbenches, templating for carpentry, etc.

### Statements

The invention may be defined by the following numbered statements which form part of the present disclosure:
Statement 1. A templating tool for templating the dimensions of a kitchen worktop, the templating tool comprising:
   a measurement target; and
   an engagement formation for engaging a kitchen unit on which the worktop will be installed,
   wherein the measurement target is spaced apart from the engagement formation by a predetermined distance such that upon engagement of the kitchen unit by the engagement formation, the measurement target defines a predetermined distance from the unit.
Statement 2. The templating tool of statement 1, wherein the engagement formation comprises an engagement surface configured to engage an external surface of the unit.
Statement 3. The templating tool of statements 1 or 2, wherein the measurement target defines a plane at a predetermined distance from the engagement formation.
Statement 4. The templating tool of any preceding statement, wherein the templating tool comprises a body portion, wherein the measurement target and the engagement formation extend away from the body portion in opposite directions.
Statement 5. The templating tool of statement 4, wherein the body portion comprises a spacing portion which defines the predetermined distance between the measurement target and the engagement formation.
Statement 6. The templating tool of statements 4 or 5, wherein the measurement target is provided at a distal end of the body portion.
Statement 7. The templating tool of any preceding statement, wherein the measurement surface comprises:
   a distal face of the measurement target at a predetermined distance from the engagement formation; or
   a proximal face of the measurement target at a predetermined distance from the engagement formation.
Statement 8. The templating tool of any preceding statement, wherein the tool is configured to rest on an upper surface of an external panel or component of the unit. Statement 9. The templating tool of any of statements 4 to 8, wherein the body portion comprises a balancing portion configured to balance the tool on an upper surface of a panel or component of the unit by acting as a counterweight to the measurement target, the engagement formation and the spacing portion.
Statement 10. The templating tool of statement 9, wherein the balancing portion comprises a thickness dimension which is greater than that of the spacing portion.
Statement 11. The templating tool of any of statements 4 to 10 wherein the body portion comprises a change in a thickness dimension.
Statement 12. The templating tool of statement 11, wherein the change in thickness is provided at the junction between the spacing portion and the balancing portion.
Statement 13. The templating tool of statements 11 or 12, wherein the change in thickness is provided in alignment with the engagement formation.
Statement 14. The templating tool of any preceding statement, wherein the predetermined distance is zero, 10 mm, 35 mm, or 60 mm.
Statement 15. A pair of templating tools according to any preceding statement,
   wherein for the first tool, the predetermined distance is defined from the engagement formation to the measurement surface of the tool, the measurement surface comprising a distal or exterior face of the measurement target,
   wherein for the second tool, the predetermined distance is defined from the engagement formation to the measurement surface of the second tool, the measurement surface of the second tool comprising a proximal or interior face of the measurement target.
Statement 16. A method of templating a worktop, the method comprising:
   engaging, by the engagement formation of the tool of any of statements 1 to 14, a unit on which the worktop will be installed; and
   taking a measurement to the measurement surface of the tool.
Statement 17. The method of statement 16, wherein the method further comprises:
   engaging an external surface of the unit by the engagement surface of the tool; and/or
   balancing the tool on an upper surface of the unit.
Statement 18. The method of statements 16 or 17, further comprising:
   engaging, by the engagement formation of a second tool according to any of statements 1 to 14, a unit on which the worktop will be installed.
Statement 19. The method of statement 18, further comprising taking a measurement from the measurement surface of each tool.
Statement 20. The method of statement 19, further comprising taking a measurement from the measurement surface of each tool from the same laser device location.

It will be appreciated by those skilled in the art that although the invention has been described by way of example, with reference to one or more exemplary examples, it is not limited to the disclosed examples and that alternative examples could be constructed without departing from the spirit and scope of the invention. The invention is defined by the appended claims.

## Claims

1. A templating tool for templating the dimensions of a kitchen worktop, the templating tool comprising:
a measurement target;
an engagement formation for engaging a kitchen unit on which the worktop will be installed; and
a body portion, wherein the measurement target and the engagement formation extend away from the body portion,
wherein the measurement target is spaced apart from the engagement formation by a predetermined distance such that upon engagement of the kitchen unit by the engagement formation, the measurement target defines a predetermined distance from the unit.

2. The templating tool of claim 1, wherein the engagement formation comprises an engagement surface configured to engage an external surface of the unit.

3. The templating tool of claims 1 or 2, wherein the measurement target defines a plane at a predetermined distance from the engagement formation.

4. The templating tool of any preceding claim, wherein the measurement target and the engagement formation extend away from the body portion in opposite directions.

5. The templating tool of any preceding claim, wherein the body portion comprises a spacing portion which defines the predetermined distance between the measurement target and the engagement formation.

6. The templating tool of any preceding claim, wherein the measurement target is provided at a distal end of the body portion.

7. The templating tool of any preceding claim, wherein the measurement surface comprises:
a distal face of the measurement target at a predetermined distance from the engagement formation; or
a proximal face of the measurement target at a predetermined distance from the engagement formation.

8. The templating tool of any preceding claim, wherein the tool is configured to rest on an upper surface of an external panel or component of the unit.

9. The templating tool of any preceding claim, wherein the body portion comprises a balancing portion configured to balance the tool on an upper surface of a panel or component of the unit by acting as a counterweight to the measurement target, the engagement formation and the spacing portion.

10. The templating tool of claim 9, wherein the balancing portion comprises a thickness dimension which is greater than that of the spacing portion.

11. The templating tool of any preceding claim wherein the body portion comprises a change in a thickness dimension, optionally wherein the change in thickness is provided at the junction between the spacing portion and the balancing portion, or wherein the change in thickness is provided in alignment with the engagement formation.

12. A pair of templating tools according to any preceding claim,
wherein for the first tool, the predetermined distance is defined from the engagement formation to the measurement surface of the tool, the measurement surface comprising a distal or exterior face of the measurement target,
wherein for the second tool, the predetermined distance is defined from the engagement formation to the measurement surface of the second tool, the measurement surface of the second tool comprising a proximal or interior face of the measurement target.

13. A method of templating a worktop, the method comprising:
engaging, by the engagement formation of the tool of any of claims 1 to 11, a unit on which the worktop will be installed; and
taking a measurement to the measurement surface of the tool.

14. The method of claim 13, wherein the method further comprises:
engaging an external surface of the unit by the engagement surface of the tool; and/or
balancing the tool on an upper surface of the unit.

15. The method of claims 13 or 14, further comprising:
engaging, by the engagement formation of a second tool according to any of claims 1 to 11, a unit on which the worktop will be installed.
